# EUROPEAN PATENT SPECIFICATION

(11) **EP 1 472 845 B1**
(45) Date of publication and mention of the grant of the patent: **07.06.2006**
(21) Application number: 03700400.9
(22) Date of filing: 14.01.2003
(51) Int. Cl.: H04L 29/06, H04N 7/24

(54) **TARGETED SCALABLE VIDEO MULTICAST BASED ON CLIENT BANDWIDTH OR CAPABILITY**
SKALIERBARE GEZIELTE VIDEOMEHRFACHSENDUNG AUF BASIS DER BANDBREITE ODER FÄHIGKEIT DES CLIENTS
MULTI-DIFFUSION VIDEO ECHELONNABLE CIBLEE BASEE SUR LA LARGEUR DE BANDE OU LA CAPACITE CLIENT

(30) Priority: 17.01.2002 US 56368
(43) Date of publication of application: 03.11.2004
(73) Proprietor: Koninklijke Philips Electronics N.V., 5621 BA Eindhoven (NL)
(72) Inventor: VAN DER SCHAAR, Mihaela, NL-5656 AA Eindhoven (NL)
(74) Representative: Slenders, Petrus J. W.
(86) International application number: PCT/IB2003/000073
(87) International publication number: WO 2003/061240

(56) References cited:
- EP-A- 0 901 285
- US-A1- 2001 043 744
- US-B1- 6 233 017
- REALNETWORKS ET AL: "RealServer 8.0" REALSYSTEM PRODUCTION GUIDE, 28 November 2000 (2000-11-28), pages 141-142, XP002177088
- REALNETWORKS ET AL: "RealSystem Release 8 with RealProducer 8.5" REALSYSTEM PRODUCTION GUIDE, 12 December 2000 (2000-12-12), pages 27-28, XP002177091

## Description

Video streaming over Internet Protocol (IP) networks has enabled a wide range of multimedia applications. Internet video streaming provides real-time delivery and presentation of continuous media content while compensating for the lack of Quality-of Service (QoS) guarantees over the Internet. Due to the variation and unpredictability of bandwidth and other performance parameters (e.g., packet loss rate) over IP networks, in general, most of the proposed streaming solutions are based on some type of a layered (or scalable) video coding scheme.

Multicasting of video over the Internet is expected to be an important technology area for many multimedia applications in the 2 1 st century. These applications include the viewing of major television events by millions of Internet users around the globe. To achieve this level of proliferation, multicast Internet video requires the development of quality scalable-video coding algorithms.

Several video scalability approaches have been adopted by video compression standards such as MPEG-2, MPEG-4, and H.263. Temporal, spatial, and quality (SNR) scalability types have been defined in these standards. All of these types of scalable video include a Base Layer (BL) and one or more Enhancement Layers (ELs). The BL part of the scalable video stream represents, in general, the minimum amount of data needed for decoding that stream. The EL part of the stream represents additional information, and therefore enhances the video signal representation when decoded by the receiver.

Fine Granular Scalability (FGS) is a new video compression framework that has been recently adopted by the MPEG-4 standard for streaming applications. FGS is capable of supporting a wide range of bandwidth-variation scenarios that characterize IP-based networks, in general, and the Internet, in particular. Images coded with this type of scalability can be decoded progressively. That is, the decoder can start decoding and displaying the image after receiving a very small amount of data. As the decoder receives more data, the quality of the decoded image is progressively enhanced until the complete information is received, decoded, and displayed. Among lead international standards, progressive image coding is one of the modes supported in JPEG and the still-image, texture coding tool in MPEG-4 video.

The convergence of the Internet with new wireless and mobile networks is creating a whole new level of heterogeneity in multimedia communications. This increased level of heterogeneity emphasizes the need for scalable and adaptive video solutions both for coding and transmission purposes. However, in general, there is an inherent tradeoff between the level of scalability and the quality of scalable video streams. In other words, the higher the bandwidth variation, the lower the overall video quality of the scalable stream that is needed to support the desired bandwidth range.

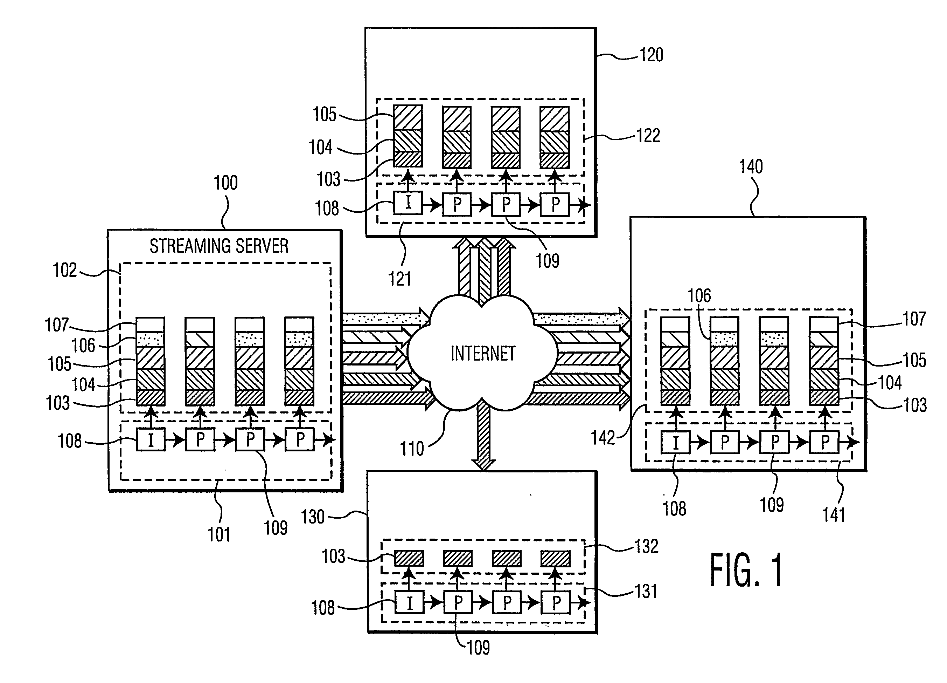

Fig. 1 is a block diagram of an exemplary prior art scalable coding system. A streaming server 100 codes a data stream comprising Intra coded (I) packets 108, Predictive coded (P) packets, and Bi-directionally coded (B) packets (not shown) to form a base layer 101 and an enhancement layer 102, having a plurality of enhancement channels 103-107. In this prior art system 100, the content (e.g., a video segment) is coded once, for a multitude of bit-rates using a scalable coding scheme. Then, this scalable content can be multicasted to a set ofreceivers 120, 130, 140 having various bandwidth or capabilities, by dividing the BL 101 and EL 102 in a set of discrete individual multicast channels 101, 103-107.

As shown in Fig. 1 the various clients 120, 130, 140 subscribe to a different numbers of channels. Client 120 receives the base layer 101 and the first three ELs 103-105.. Client 130 receives the base layer 101 and only the first EL 103.. Client 140 receives the base layer 101 and all five ELs 103-107. By coding the content 108, 109 with just one scalable stream, a high coding efficiency penalty results between the non-scalable codec performance and FGS, due to the lack of motion compensation (MC) of FGS.

Alternatively, different methods can be employed to improve the quality of FGS, such as MC-FGS structures, frequency weighting, selective enhancement and the like. However, all these techniques benefit the quality only around a selected bit-rate range.

Moreover, if a specific set of terminals have certain capabilities (e.g. a powerful MC function), the prior art does not allow the streaming server 100 to take advantage of the capabilities of these recipients, because it must deliver a data stream that can be decoded by a recipient host that lacks these capabilities.

EP 0 901 285 discloses a video distributing system that transmits MPEG data. The system monitors the load of a network. When the load is heavy the system removes frames from the MPEG stream. This document dose not address multicast transmission. The disclosed technique is suitable for unicast and for broadcast, if the same stream is transmitted to a plurality of recipients. However, in the latter case no optimal use is made of the available bandwidth and capability of all recipients.

An improved method for providing streaming data transmission is desired.

The present invention is a method and system for multicast transmission of video data as claimed in the independent claims. An identification is made of either: (1) an average or minimum available bandwidth of a link over which a data stream of a given video segment is to be transmitted or (2) a capability of a recipient host to which the data stream is to be transmitted. A selection is made of either: (1) a corresponding one of a plurality of predetermined ranges of bandwidths so that the selected range contains the identified average minimum available bandwidth; or (2) a corresponding one of a plurality of different data stream types so that the identified capability of the recipient host is used to process data of the selected data stream type. The data stream is coded in a manner which takes advantage of the range of bandwidths or type of data stream that has been or is to be selected. The coded data stream is transmitted over the link to a recipient.

Fig. 1 is block diagram of a conventional system for transmitting streaming data over the Internet.

Fig. 2 is a block diagram of an exemplary system according to the invention.

Fig. 3 is a flow chart diagram of a first exemplary method according to the invention, wherein multiple data streams are coded before selecting a type of stream to stream to a recipient.

Fig. 4 is a flow chart diagram of a second exemplary method according to the invention, wherein a type of stream to stream to a recipient is selected before coding the data stream.

Fig. 5 is a diagram showing how the tradeoff between complexity and efficiency affects choice of data stream type for FGS data streams.

In the exemplary embodiments of the invention, the scalability range is restricted in order to improve the transmission/coding efficiency and to restrict the variation in receiver complexity requirements.

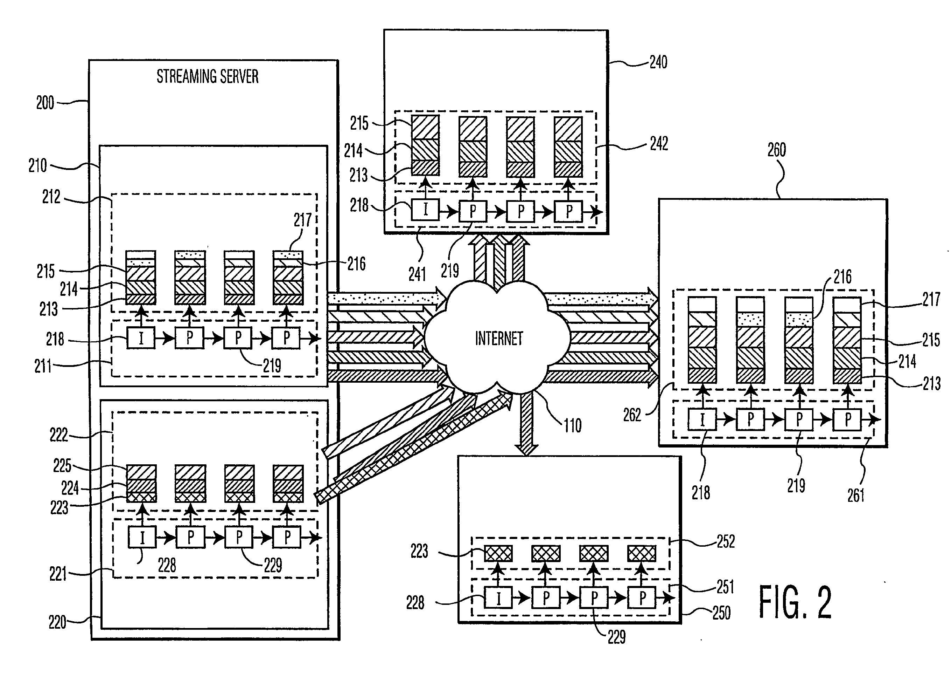

Fig. 2 is a block diagram of a system for transmitting video data according to the present invention. The system has a streaming server 200 that codes and may store a plurality of streams 210, 220 for the same content (e.g., video segment), to target different recipient groups having different link bandwidths or different recipient host group capabilities. Server 200 decides which data stream (representation of the content) to multicast to a set of receivers based on their capabilities or the available "average" bit-rate of the link connecting the recipient to the server.

Server 200 can code two or more different data streams representing the same content (e.g., video segment). Although only two data streams 210 and 220 are shown, three or more streams may be used.

For server 200, for example, a set of FGS, progressive FGS (P-FGS) or motion compression FGS (MC-FGS) streams, targeted at various bit-rate "ranges" (preferably, not very wide ranges) are either coded a priori and stored for later use, or real-time coded individually in response to requests. Also, various quality improvement tools can be employed. Then, when a client 240, 250 or 260 wants to set-up a connection, the client informs server 200 about both its capability and average available bandwidth. Then, server 200 can decide in which 'bandwidth range' the client 240, 250, 260 is situated (or what capability the client has) and select for each individual client or client group a set of channels. The video data are then targeted to this bandwidth range (or client capability).

The system is particularly useful in multicast environments, striking a balance between the unicast mode (which allows tailoring of the data stream to best serve a single recipient) and broadcast mode (which allows most efficient coding in a streaming server by coding a single data stream for all recipient groups).

In prior art systems, the disadvantage of using just one scalable coded stream for a large bit-rate range is the resulting quality penalty gap. Advantageously, system 200 can send bit-streams to the various receivers 240, 250, 260 that take into consideration the terminal capabilities or available "average" bit-rate for each recipient group. System 200 can target a stream to these parameters. This method takes into consideration the clients'/receivers' "average" available bandwidth or terminals' capabilities, when deciding which video data stream should be transmitted and allocated across the multiple channels accessible to each individual group of receivers. The exemplary method results in a higher quality at the receiver side, and a more efficient utilization of resources.

For example, assume that, as shown in Fig. 2, clients 240 and 260 belong to a recipient group having a high average available bandwidth, and client 250 belongs to a recipient group having a low average available bandwidth. For the set of receivers (e.g., 250) with low bit-rates, four channels are sent, one channel 221 containing base-layer data 228, 229, a second channel 223 containing the most significant bit (MSB) of the FGS data, and the other two channels 224 and 225 containing FGS enhancement-layer data of lesser significance. Six channels are sent to another set of receivers 240, 260 with high bit-rates, including one channel 218 containing base-layer data, one layer 213 containing the MSB of the FGS EL data, and the other four channels 214-217 containing FGS EL data of lesser significance.

Unlike prior art systems in which only a single data stream is coded for a video segment, in system 200, the individual layers 211, 213, 214, 215 of data stream 210 are not required to be the same as the corresponding layers 221, 223, 224, 225 of data stream 220, even though both data streams are representations of the same content (e.g., video segment). In some embodiments of the invention, the various streams all share the same BL, but have respectively different ELs. In other embodiments, the streams may have respectively different BLs. An example including different BLs, is the MC-FGS case, when part of the EL is included in the BL of one of the streams for the prediction of the BL. In this scenario, the BL is different in the two streams. For example, data stream 210 may be coded without frequency weighting, and data stream 220 may be coded with frequency weighting, or vice-versa. Similarly, the data stream 220 may be coded with selective enhancement or any other quality improvement tool targeted towards a particular bit-rate range.

Many other variations are possible besides those shown in Fig. 2, and can readily be appreciated by those skilled in the art. In another example, the low data rate stream 220 may include two channels, one containing base-layer data, the other the MSB of the FGS data with frequency weighting. The high data rate stream 210 may contain four channels, one containing base-layer data, a second layer containing the MSB of the FGS EL data (without frequency weighting), and the other two channels containing FGS EL data of lesser significance. These are only examples, and are not limiting.

For any given mix of recipients in a multicast groups (MG), a methodology based on the mix of recipients is followed to determine what the data streams should be. For example, assume that there are 1000 devices listening to the MG and 10% of them have a bandwidth as low as 100 kbps. The remaining 90% of them have a bandwidth between 300 kbps and 1.0 Mbps. Then an MC-FGS stream should be used with a BL of 100 kbps for the first data stream (low data rate users), and an extended BL of 300 kbps should be used for the second data stream (high data rate users). In another example, if 30% of devices or more have bandwidth below 300 kbps, then transmitting an FGS stream with a BL of 100 kbs is more appropriate. Hence, the algorithm should look at the various scalable streams, and decide which one to stream based on the complexity or efficiency of these streams.

System 200 uses more bandwidth than in prior art systems, wherein just one stream is sent to all receivers, but system 200 uses less bandwidth than in the case of individually tailoring each data stream in a non-scalable based streaming environment (e.g., for unicast transmission). Thus, system 200 provides a good compromise between the bandwidth utilization across the network and the achieved quality at the receivers 240, 250, 260.

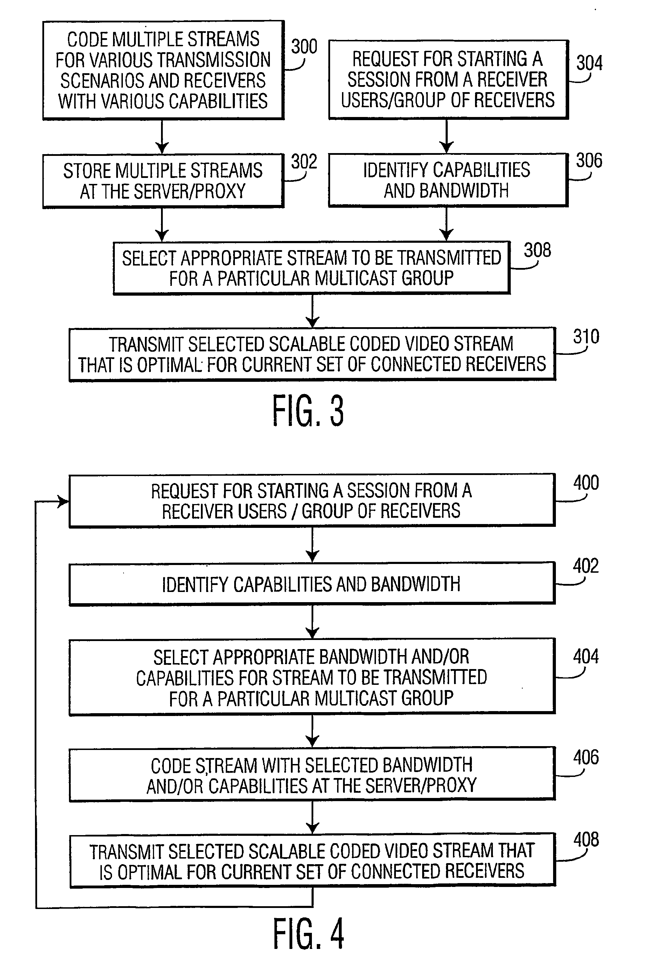

Figs. 3 and 4 show two exemplary methods for using system 200, comprising four steps. These four steps are executed in respectively different orders in Figs. 3 and 4. One step includes identifying a bandwidth of a link or a capacity of a recipient host. In the case of bandwidth, an average or minimum available bandwidth of a link over which a data stream of a given video segment is to be transmitted is identified. Alternatively a capability of a recipient host to which the data stream is to be transmitted may be identified.

Another step includes selecting either a range of bandwidths or a data stream type. The range of bandwidths may be one of a plurality of predetermined ranges of bandwidths, such that the selected range contains the identified average or minimum available bandwidth. The data stream type may be one of a plurality of different data stream types, such that the identified capability of the recipient host is used to process data of the selected data stream type.

Another step includes coding the data stream in a manner that takes advantage of the range of bandwidths or type of data stream that has been selected or is to be selected. The coding may be performed before or after the selecting. If the coding step precedes the selecting step, then the selection is made from the same group of data streams that have been previously coded.

The remaining step includes transmitting the coded data stream over the link to a recipient.

Fig. 3 shows a first exemplary method, in which the coding step precedes the selecting step.

At step 300, server 200 codes a plurality of data streams. The plurality of data streams each correspond to a respectively different combination of a bandwidth range and/or a set of recipient capabilities.

At step 302, the plurality of data streams is stored within server 200.

At step 304, a request for starting a streaming session is received from a receiver of the video data, or a users group of receivers.

At step 306, the receiver or users group of receivers identify the minimum or average available bandwidth and/or specific capabilities of the receiver(s). This involves communication between receiver & sender regarding, for example, which streams are available at the sender side (i.e., which options are available for the receiver). This communication/negotiation can be done through a protocol such as RTSP or the like. Then, the receiver can subscribe to a particular (set of) scalable video tracks.

Steps 304 and 306 may be begun before or after the first time steps 300 and 302 are performed. Preferably, steps 300 and 302 are performed first. In any event, in the embodiment of Fig. 3, step 306 (identying capabilities and bandwidth) is performed before step 308.

At step 308, the server selects an appropriate stream to be transmitted to the particular MG. The selection can be reduced to application of simple criteria. For example, if the data streams differ in target bandwidth range, then the data stream having the largest bandwidth range that does not exceed the data rate of the user's (or users group's) link is selected. If the data streams differ in target recipient host capability, then the data stream corresponding to this specific host's (or users group's) capability is selected. If the data streams differ in both target bandwidth range and capability, then both criteria are applied.

At step 310, the optimal scalable video stream for the user or users group (i.e., the available stream that best takes advantages of the bandwidth and/or capabilities of the recipient or recipient group) is streamed to the user.

After the first time that steps 300-310 are executed, for streaming data to additional recipients, steps 304-310 are repeated. It is not necessary to repeat steps 300 and 302, unless new data streams are to be added.

Thus, in the method of Fig. 3, the various data streams representing the same video segment can be coded in advance. Upon identification of the bandwidth or capability of a given MG, the appropriate data stream is available for immediate streaming to that MG. The receivers can be grouped together in a MG based on their requests for a particular scalable stream.

A specific (but not limiting example) of the method of Fig. 3 includes: coding a plurality of data streams using a fine granular scalability technique, each of the plurality of data streams corresponding to a respectively different range of data rates at which the data streams are to be transmitted; determining an average or minimum available bandwidth of a link over which one of the data streams is to be transmitted; selecting the one of the plurality of ranges having a greatest data rate among all of the plurality of ranges that can be accommodated by a data rate of the link over which the video data are to be transmitted; and streaming the data stream corresponding to the selected range.

Fig. 4 is a flow chart diagram of a second exemplary method according to the invention. In the method of Fig. 4, the identifying step precedes the coding step. The steps of identifying a bandwidth or capability, selecting a bandwidth range or data stream type, and coding the data stream that takes advantage of the range of bandwidths or type of data stream are performed in real time or near real time in response to a request for the video segment.

Using the method of Fig. 4, the identifying, selecting and coding steps can be performed in first and second iterations for the same video segment, with a respectively different average or minimum available bandwidth or recipient host capability identified during each of the first and second iterations, and a respectively different coded data stream is provided for the same video segment during each of the first and second iterations. Thus, it is still possible to code two different scalable data streams that are tailored for the individual recipients or recipient groups.

At step 400 a receiver user or a group of receivers requests a session.

At step 402, server 200 (or a proxy server) receives from the recipient host an identification of the average or minimum available bandwidth of the link or an identification of the recipient host capability when the link is established.

At step 404, the appropriate bandwidth and/or capability for this user or users' group (i.e., one of a limited number of predetermined bandwidth/capability combinations that best takes advantages of the bandwidth and/or capabilities of the recipient or recipient group) is selected.

At step 406, server 200 codes a data stream for the selected bandwidth and/or capabilities of the recipient(s).

At step 408, the coded data stream is transmitted to the user or user group. Steps 400 to 408 are repeated. Each time, a different combination of bandwidth and/or capabilities may be selected from a predetermined set having a limited number of bandwidths and/or capabilities.

In Figs. 3 and 4, the bandwidth is indicated by the receivers based on either their preference (e.g. the amount of money they want to pay for a particular QoS level) or the empirically experienced bandwidth (this can be determined by channel estimation mechanisms, RTCP reports and the like.).

The following example is for a case with three different data streams (QCIF, CIF and SD), all representing the same video segment.
FOR quarter common interchange format (QCIF) resolution images (i.e. 176x144 pixels) 10kbps FGS
30kbps FGS
10+30 MCFGS
For common interchange format (CIF) resolution images (i.e. 352x288 pixels)
100kbs FGS
300kbps FGS
100+300 MCFGS
For Standard Definition (SD) resolution images (i.e. 720x480 pixels)
1Mbps FGS
3Mbps FGS
5Mbps FGS

In the example above, the three data streams have respectively different BLs and respectively different ELs. However, examples can be designed like the one above about Frequency Weighting where the BL is the same in all cases.

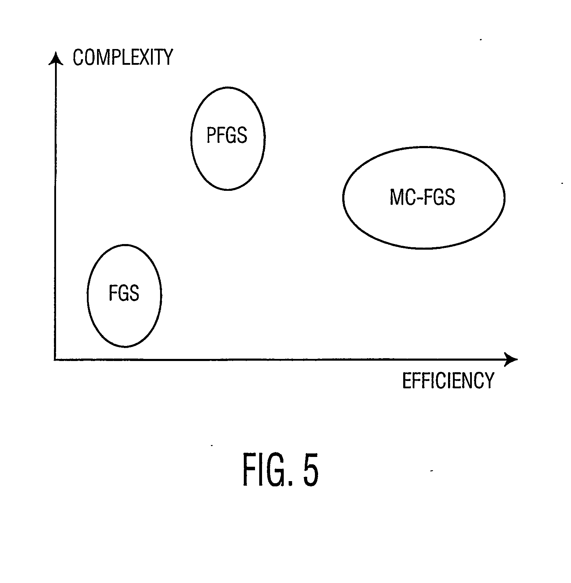

Fig. 5 is a diagram showing how the tradeoff between complexity and efficiency affects choice of data stream type for FGS data streams. An example of an application of the strategy is as follows. Assume that there are 1000 devices listening to the MG and 90% of them are having a bandwidth between 300 kbps and 1Mbps. The rest have a bandwidth as low as 100 kbps. Then MC-FGS stream should be used with a BL of 100 kbps and an extended BL of 300 kbps. The extended base level includes the normal BL information, plus extra information taken from one or more of the Els. Alternatively, if 30% of devices or more have bandwidth below 300 kbps, then transmitting an FGS stream with a BL of 100 kbps is more appropriate. Thus, switching between FGS and MC-FGS structures (i.e., selecting either an FGS stream or an MC-FGS stream) based on bandwidth is contemplated.

Hence, the algorithm should look at the various scalable streams, and decide which one to stream based on the complexity or efficiency of these streams.

Optionally, the decision as to which data stream is sent to a particular receiver can be "remade" within a session, if the bandwidth available to a client varies dramatically. This may be accomplished by deciding to send to that client a different stream, e.g., by switching. Alternatively, that client may be connected to a different MG with more similar bandwidth/receiver characteristics. Server 200 may code streams that are optimized for variety of different receiver capabilities, including, but not limited to: CPU, Memory, Coprocessors (Motion-compensation, Frame-rate upconvertors, post-processing, and the like.). The same capabilities are considered in deciding which stream to send to a given multicast group (MG). Thus, it may be possible, to improve the FGS quality across the whole bit-rate range.

Although the exemplary system 200 transmits data streams over the Internet, this method would also benefit scalable media streaming for wireless links.

Although the example described above includes FGS, it is contemplated that the invention may be applied to other scalability types, such as wavelet-based scalable video coding (e.g. 3D SPIHT (Set Partitioning Into Hierarchical Trees) and the like), hybrid temporal-SNR-spatial scalability techniques based on MPEG-4, and the like.

Although the exemplary system 200 stores the various data streams within the server, the data streams may alternatively be stored in a proxy server. The proxy server may be, for example, a router or a gateway, or a base station of a wireless network. The proxy server may provide various data streams to wireless client devices (e.g., telephones, palmtop computers, personal digital assistants, wireless modems, and the like), with each stream targeted to a respectively different combination of bandwidth and/or client capabilities.

Systems having two or three streams offer improved video for recipients having higher bandwidth or additional processing capabilities, without a large sacrifice in efficiency. It is also contemplated that a server may store four or five streams or more.

It is understood that the recipient may be any of a variety of devices, including, but not limited to a desktop, laptop or palmtop computer, a television, a set top converter box, a video image storage device such as a video tape recorder or digital video recorder, a TiVO device, combinations of the above, and the like.

The present invention may be embodied in the form of computer-implemented processes and apparatus for practicing those processes. The present invention may also be embodied in the form of computer program code embodied in tangible media, such as floppy diskettes, read only memories (ROMs), CD-ROMs, hard disk drives, ZIP^{™} drives, or any other computer-readable storage medium, wherein, when the computer program code is loaded into and executed by a computer, the computer becomes an apparatus for practicing the invention. The present invention may also be embodied in the form of computer program code, for example, whether stored in a storage medium, loaded into and/or executed by a computer, or transmitted over some transmission medium, such as over the electrical wiring or cabling, through fiber optics, or via electromagnetic radiation, wherein, when the computer program code is loaded into and executed by a computer, the computer becomes an apparatus for practicing the invention. When implemented on a general-purpose processor, the computer program code segments configure the processor to create specific logic circuits.

Although the invention has been described in terms of exemplary embodiments, it is not limited thereto. Rather, the appended claim should be construed broadly, to include other variants and embodiments of the invention which may be made by those skilled in the art without departing from the scope and range of equivalents of the invention.

## Claims

1. A method for multicast transmission of video data, comprising the steps of :
a) identifying (306, 402) for each of a plurality of groups of recipient hosts (240, 250, 260) one of the set consisting of : an average or minimum available bandwidth of a link over which a data stream of a given video segment is to be transmitted to the group; and a capability of a recipient host in the group to which the data stream is to be transmitted ;
b) selecting (308, 404) for each of the plurality of groups a corresponding one of the set consisting of: one of a plurality of predetermined ranges of bandwidths, so that the selected range contains the identified average or minimum available bandwidth to the group; and one of a plurality of different data stream types (210, 220), wherein layers (211, 213-215, 221, 223-225) of respective stream types are mutually different, so that the identified capability of the recipient host (24, 250, 260) in the group is used to process data of the selected data stream type;
c) coding (300, 406) the data stream in a plurality of manners using selected ones of the plurality of different data stream types (210, 220), each of which takes advantage of a respective range of bandwidths or type of data stream that has been or is to be selected; and
d) transmitting (310, 408) respective ones of the coded data streams concurrently over the links each to the recipient host (24, 250, 260) in one of the groups.

2. The method of claim 1, wherein
- step c precedes step a, and
- step c includes coding a plurality of data streams, each corresponding to a respectively different one of the plurality of predetermined ranges of bandwidths.

3. The method of claim 2, wherein a scalable coding technique is used, and two of the plurality of data stream types have a common base layer and respectively different enhancement layers.

4. The method of claim 3, wherein a first one of the two data streams has an enhancement layer with frequency weighting, selective enhancement, and a second one of the two data streams has an enhancement layer without frequency weighting.

5. The method of claim 1, wherein
- step a precedes step c, and
- steps a, b and c are performed in real time in response to a request for the video segment.

6. The method of claim 1, wherein:
- step a precedes step c,
- steps a, b, c and d are performed in first and second iterations for the same video segment,
- a respectively different average or minimum available bandwidth or recipient host capability is identified in step a during each of the first and second iterations,
- a respectively different coded data stream is provided for the same video segment in step c during each of the first and second iterations.

7. The method of claim 1, wherein step a includes receiving from the recipient host an identification of the average or minimum available bandwidth of the link or an identification of the recipient host capability when the link is established.

8. The method of claim 1, wherein the identified capability is the ability to perform motion compensation.

9. The method of claim 1, wherein:
- step a includes determining an average or minimum available bandwidth of a link over which one of the data streams is to be transmitted;
- step b includes selecting the one of the plurality of ranges having a greatest data rate among all of the plurality of ranges that can be accommodated by a data rate of the link over which the video data are to be transmitted; and
- step c includes coding a plurality of data streams using a fine granular scalability technique, each of the plurality of data streams corresponding to a respectively different range of data rates at which the data streams are to be transmitted.

10. A system for multicast transmission of video data, comprising:
a) means for identifying for each of a plurality of groups of recipient hosts (240, 250, 260) one of the set consisting of: an average or minimum available bandwidth of a link over which a data stream of a given video segment is to be transmitted to the group; and a capability of a recipient host in the group to which the data stream is to be transmitted ;
b) means for selecting for each of the plurality of groups a corresponding one of the set consisting of: one of a plurality of predetermined ranges of bandwidths, so that the selected range contains the identified average or minimum available bandwidth to the group; and one of a plurality of different data stream types (210, 220), wherein layers (211, 213-215, 221, 223-225) of respective stream types are mutually different, so that the identified capability of the recipient host (24, 250, 260) in the group is used to process data of the selected data stream type;
c) means for coding the data stream in a plurality of manners using selected ones of the plurality of different data stream types (210, 220), each of which takes advantage of a respective range of bandwidths or type of data stream that has been or is to be selected; and
d) means for transmitting respective ones of the coded data streams concurrently over the links each to the recipient host (24, 250, 260) in one of the groups.

11. A machine readable medium that contains computer program code, wherein, when the computer program code is executed by a processor, the processor performs a method for transmitting video data, comprising the steps of:
a) identifying (306, 402) for each of a plurality of groups of recipient hosts (240, 250, 260) one of the set consisting of: an average or minimum available bandwidth of a link over which a data stream of a given video segment is to be transmitted to the group; and a capability of a recipient host in the group to which the data stream is to be transmitted ;
b) selecting (308, 404)) for each of the plurality of groups a corresponding one of the set consisting of: one of a plurality of predetermined ranges of bandwidths, so that the selected range contains the identified average or minimum available bandwidth to the group; and one of a plurality of different data stream types (210, 220), wherein layers (211, 213-215, 221, 223-225) of respective stream types are mutually different, so that the identified capability of the recipient host (24, 250, 260) in the group is used to process data of the selected data stream type;
c) coding (300, 406) the data stream in a plurality of manners using selected ones of the plurality of different data stream types (210, 220), each of which takes advantage of a respective range of bandwidths or type of data stream that has been or is to be selected; and
d) transmitting (310, 408) respective ones of the coded data streams concurrently over the links each to the recipient host (24, 250, 260) in one of the groups.

12. A signal encoded with data representing computer program code, wherein, when the computer program code is executed by a processor, the processor performs a method for transmitting video data, comprising the steps of:
a) identifying (306, 402) for each of a plurality of groups of recipient hosts (240, 250, 260) one of the set consisting of : an average or minimum available bandwidth of a link over which a data stream of a given video segment is to be transmitted to the group; and a capability of a recipient host in the group to which the data stream is to be transmitted;
b) selecting (308, 404)) for each of the plurality of groups a corresponding one of the set consisting of: one of a plurality of predetermined ranges of bandwidths, so that the selected range contains the identified average or minimum available bandwidth to the group; and one of a plurality of different data stream types (210, 220), wherein layers (211, 213-215, 221, 223-225) of respective stream types are mutually different, so that the identified capability of the recipient host (24, 250, 260) in the group is used to process data of the selected data stream type;
c) coding (300, 406) the data stream in a plurality of manners using selected ones of the plurality of different data stream types (210, 220), each of which takes advantage of a respective range of bandwidths or type of data stream that has been or is to be selected; and
d) transmitting (310, 408) respective ones of the coded data streams concurrently over the links each to the recipient host (24, 250, 260) in one of the groups.

## Patentansprüche

1. Verfahren zur Mehrfachsendung von Videodaten, wobei dieses Verfahren die nachfolgenden Verfahrensschritte umfasst:
a) das Identifizieren (306, 402) für jede einer Anzahl Gruppen von Empfängergastgebem (240, 250, 260), wobei einer des Satzes besteht aus: einer mittleren oder minimalen verfügbaren Bandbreite einer Kopplung, über die ein Datenstrom eines bestimmten Videosegmentes zu der Gruppe übertragen werden soll; und einer Fähigkeit eines Empfängergastgebers in der Gruppe, zu dem der Datenstrom übertragen werden soll;
b) das Selektieren (308, 404) für jede der Anzahl Gruppen einer entsprechenden Gruppe des Satzes, der besteht aus: einem einer Anzahl vorbestimmter Bereiche von Bandbreiten, so dass der selektierte Bereich die identifizierte mittlere oder minimale verfügbare Bandbreite der Gruppe enthält; und einem einer Anzahl verschiedener Datenstromtypen (210, 220), wobei Schichten (211, 213 - 215, 221, 223 - 225) betreffender Stromtypen untereinander verschieden sind, so dass die identifizierte Fähigkeit des Empfängergastgebers (24, 250, 260) in der Gruppe verwendet wird zum Verarbeiten von Daten von selektierten Datenstromtyp;
c) das Codieren (300, 406) des Datenstroms auf vielerlei Weisen unter Verwendung von einigen der vielen verschiedenen Datenstromtypen (210, 220), die je den Vorteil eines bestimmten Bereichs an Bandbreiten oder eines Datenstromtyps haben, der selektiert worden ist oder der selektiert werden muss; und
d) das Übertragen (310, 408) bestimmter Ströme der codierten Datenströme, und zwar gleichzeitig über die Kopplungen, je zu dem Empfängergastgeber (24, 250, 260) in einer der Gruppen.

2. Verfahren nach Anspruch 1, wobei
- der Schritt c) dem Schritt a) vorhergeht, und
- der Schritt c) die Codierung von Datenströmen umfasst, die je mit einem betreffenden anderen Bereich der vielen vorbestimmten Bandbreitenbereiche übereinstimmen.

3. Verfahren nach Anspruch 2, wobei eine skalierbare Codierungstechnik angewandt wird, und zwei Ströme der vielen Datenstromtypen eine gemeinsame Basisschicht und betreffende verschiedene verbesserte Schichten haben.

4. Verfahren nach Anspruch 3, wobei ein erster Strom der zwei Datenströme eine verbesserte Schicht mit Frequenzgewichtung hat, und der zweite Strom der zwei Datenströme eine Verbesserungsschicht ohne Frequenzgewichtung hat.

5. Verfahren nach Anspruch 1, wobei:
- der Schritt a) dem Schritt c) vorhergeht, und
- der Schritt a), b) und c) in Echtzeit in Reaktion auf einen Antrag für das Videosegment durchgeführt wird.

6. Verfahren nach Anspruch 1, wobei:
- der Schritt a) dem Schritt c) vorhergeht,
- der Schritt a), b) und c) in einer ersten und einer zweiten Wiederholung für dasselbe Videosegment durchgeführt wird,
- eine betreffende verschiedene mittlere oder minimale verfügbare Bandbreite oder Empfängergastgeberfähigkeit in dem Schritt a) während jeder der ersten und zweiten Wiederholung identifiziert wird,
- ein betreffender anders codierter Datenstrom für dasselbe Videosegment in dem Schritt c) während jeder der ersten und zweiten Wiederholung geschaffen wird.

7. Verfahren nach Anspruch 1, wobei der Schritt a) das Empfangen einer mittleren oder minimalen verfügbaren Bandbreite der Kopplung von dem Empfängergastgeber umfasst oder eine Identifikation der Empfängergastgeberfähigkeit, wenn die Kopplung hergestellt ist.

8. Verfahren nach Anspruch 1, wobei die identifizierte Fähigkeit die Fähigkeit zum Durchführen von Bewegungskompensation ist.

9. Verfahren nach Anspruch 1, wobei:
- der Schritt a) das Ermitteln einer mittleren oder minimalen verfügbaren Bandbreite einer Kopplung umfasst, über die einer der Datenströme übertragen werden soll;
- der Schritt b) das Selektieren des einen Bereichs der vielen Bereiche mit einer größten Datenrate von allen der vielen Bereiche, die durch eine Datenrate der Kopplung angepasst werden kann, über welche die Videodaten übertragen werden sollen; und
- der Schritt c) das Codieren einer Anzahl Datenströme unter Anwendung einer feinkörnigen Skalierbarkeitstechnik umfasst, wobei jeder der vielen Datenströme mit einem betreffenden anderen Bereich von Datenraten übereinstimmt, mit der die Datenströme übertragen werden sollen.

10. System zur Mehrwegübertragung von Videodaten, wobei dieses System Folgendes umfasst:
a) Mittel zum Identifizieren für jede einer Anzahl Gruppen von Empfängergastgebem (240, 250, 260), wobei einer des Satzes besteht aus: einer mittleren oder minimalen verfügbaren Bandbreite einer Kopplung, über die ein Datenstrom eines bestimmten Videosegmentes zu der Gruppe übertragen werden soll; und einer Fähigkeit eines Empfängergastgebers in der Gruppe, zu dem der Datenstrom übertragen werden soll;
b) Mittel zum Selektieren für jede der Anzahl Gruppen einer entsprechenden Gruppe des Satzes, der besteht aus: einem einer Anzahl vorbestimmter Bereiche von Bandbreiten, so dass der selektierte Bereich die identifizierte mittlere oder minimale verfügbare Bandbreite der Gruppe enthält; und einem einer Anzahl verschiedener Datenstromtypen (210, 220), wobei Schichten (211, 213 - 215, 221, 223 - 225) betreffender Stromtypen untereinander verschieden sind, so dass die identifizierte Fähigkeit des Empfängergastgebers (24, 250, 260) in der Gruppe verwendet wird zum Verarbeiten von Daten von selektierten Datenstromtyp;
c) Mittel zum Codieren des Datenstroms auf vielerlei Weisen unter Verwendung von einigen der vielen verschiedenen Datenstromtypen (210, 220), die je den Vorteil eines bestimmten Bereichs an Bandbreiten oder eines Datenstromtyps haben, der selektiert worden ist oder der selektiert werden muss; und
d) Mittel zum Übertragen bestimmter Ströme der codierten Datenströme, und zwar gleichzeitig über die Kopplungen, je zu dem Empfängergastgeber (24, 250, 260) in einer der Gruppen.

11. Computerlesbares Medium, das einen Computerprogrammcode enthält, wobei, wenn der Computerprogrammcode von einem Prozessor durchgeführt wird, der Prozessor ein Verfahren zum Übertragen von Videodaten durchführt, das die nachfolgenden Verfahrensschritte umfasst:
a) das Identifizieren (306, 402) für jede einer Anzahl Gruppen von Empfängergastgebern (240, 250, 260), wobei einer des Satzes besteht aus: einer mittleren oder minimalen verfügbaren Bandbreite einer Kopplung, über die ein Datenstrom eines bestimmten Videosegmentes zu der Gruppe übertragen werden soll; und einer Fähigkeit eines Empfängergastgebers in der Gruppe, zu dem der Datenstrom übertragen werden soll;
b) das Selektieren (308, 404) für jede der Anzahl Gruppen einer entsprechenden Gruppe des Satzes, der besteht aus: einem einer Anzahl vorbestimmter Bereiche von Bandbreiten, so dass der selektierte Bereich die identifizierte mittlere oder minimale verfügbare Bandbreite der Gruppe enthält; und einem einer Anzahl verschiedener Datenstromtypen (210, 220), wobei Schichten (211, 213 - 215, 221, 223 - 225) betreffender Stromtypen untereinander verschieden sind, so dass die identifizierte Fähigkeit des Empfängergastgebers (24, 250, 260) in der Gruppe verwendet wird zum Verarbeiten von Daten von selektierten Datenstromtyp;
c) das Codieren (300, 406) des Datenstroms auf vielerlei Weisen unter Verwendung von einigen der vielen verschiedenen Datenstromtypen (210, 220), die je den Vorteil eines bestimmten Bereichs an Bandbreiten oder eines Datenstromtyps haben, der selektiert worden ist oder der selektiert werden muss; und
d) das Übertragen (310, 408) bestimmter Ströme der codierten Datenströme, und zwar gleichzeitig über die Kopplungen, je zu dem Empfängergastgeber (24, 250, 260) in einer der Gruppen.

12. Signal, das mit Daten codiert ist, die einen Computerprogrammcode darstellen, wobei, wenn der Computerprogrammcode von einem Prozessor durchgeführt wird, der Prozessor ein Verfahren zum Übertragen von Videodaten durchführt, das die nachfolgenden Verfahrensschritte umfasst:
a) das Identifizieren (306, 402) für jede einer Anzahl Gruppen von Empfängergastgebem (240, 250, 260), wobei einer des Satzes besteht aus: einer mittleren oder minimalen verfügbaren Bandbreite einer Kopplung, über die ein Datenstrom eines bestimmten Videosegmentes zu der Gruppe übertragen werden soll; und einer Fähigkeit eines Empfängergastgebers in der Gruppe, zu dem der Datenstrom übertragen werden soll;
b) das Selektieren (308, 404) für jede der Anzahl Gruppen einer entsprechenden Gruppe des Satzes, der besteht aus: einem einer Anzahl vorbestimmter Bereiche von Bandbreiten, so dass der selektierte Bereich die identifizierte mittlere oder minimale verfügbare Bandbreite der Gruppe enthält; und einem einer Anzahl verschiedener Datenstromtypen (210, 220), wobei Schichten (211, 213 - 215, 221, 223 - 225) betreffender Stromtypen untereinander verschieden sind, so dass die identifizierte Fähigkeit des Empfängergastgebers (24, 250, 260) in der Gruppe verwendet wird zum Verarbeiten von Daten von selektierten Datenstromtyp;
c) das Codieren (300, 406) des Datenstroms auf vielerlei Weisen unter Verwendung von einigen der vielen verschiedenen Datenstromtypen (210, 220), die je den Vorteil eines bestimmten Bereichs an Bandbreiten oder eines Datenstromtyps haben, der selektiert worden ist oder der selektiert werden muss; und
d) das Übertragen (310, 408) bestimmter Ströme der codierten Datenströme, und zwar gleichzeitig über die Kopplungen, je zu dem Empfängergastgeber (24, 250, 260) in einer der Gruppen.

## Revendications

1. Procédé de transmission par multidiffusion de données vidéo, comprenant les étapes suivantes :
a) l'identification (306, 402) pour chacun d'une pluralité de groupes de destinataires (240, 250, 260) d'un élément parmi l'ensemble composé de : une largeur de bande disponible moyenne ou minimum d'une liaison par laquelle un flux de données d'un segment vidéo donné doit être transmis au groupe, et une capacité d'un destinataire du groupe auquel le flux de données doit être transmis;
b) la sélection (308, 404) pour chacun de la pluralité de groupes d'un élément correspondant parmi le jeu composé de : un intervalle parmi une pluralité d'intervalles prédéterminés de largeurs de bande, de sorte que l'intervalle sélectionné contienne la largeur de bande disponible moyenne ou minimum identifiée pour le groupe, et un type parmi une pluralité de types de flux de données différents (210, 220), dans lequel des couches (211, 213 à 215, 221, 223 à 225) de types de flux respectifs sont différentes les unes des autres, de sorte que la capacité identifiée du destinataire (240, 250, 260) dans le groupe soit utilisée pour traiter des données du type de flux de données sélectionné;
c) le codage (300, 406) du flux de données de plusieurs manières en utilisant des types sélectionnés parmi la pluralité de types de flux de données différents (210, 220), dont chacun tire parti d'un intervalle respectif de largeurs de bande ou d'un type de flux de données qui a été ou va être sélectionné, et
d) la transmission simultanée (310, 408) de flux respectifs parmi les flux de données codés par les liaisons à chaque destinataire (240, 250, 260) dans un des groupes.

2. Procédé suivant la revendication 1, dans lequel
- l'étape c précède l'étape a, et
- l'étape c comprend le codage d'une pluralité de flux de données, correspondant chacun à un intervalle respectivement différent parmi la pluralité d'intervalles prédéterminés de largeurs de bande.

3. Procédé suivant la revendication 2, dans lequel une technique de codage évolutif est utilisée, et deux types parmi la pluralité de types de flux de données ont une couche de base commune et des couches d'amélioration différentes les unes des autres.

4. Procédé suivant la revendication 3, dans lequel un premier des deux flux de données comporte une couche d'amélioration avec pondération en fréquence, amélioration sélective, et un deuxième des deux flux de données comporte une couche d'amélioration sans pondération en fréquence.

5. Procédé suivant la revendication 1, dans lequel
- l'étape a précède l'étape c, et
- les étapes a, b et c sont exécutées en temps réel en réponse à une requête pour le segment vidéo.

6. Procédé suivant la revendication 1, dans lequel :
- l'étape a précède l'étape c;
- les étapes a, b, c et d sont exécutées dans des première et deuxième itérations pour le même segment vidéo;
- une largeur de bande disponible moyenne ou minimum ou une capacité du destinataire respectivement différente est identifiée à l'étape a pendant chacune des première et deuxième itérations, et
- un flux de données codé respectivement différent est fourni pour le même segment vidéo à l'étape c pendant chacune des première et deuxième itérations.

7. Procédé suivant la revendication 1, dans lequel l'étape a comprend la réception du destinataire d'une identification de la largeur de bande disponible moyenne ou minimum de la liaison ou une identification de la capacité du destinataire lorsque la liaison est établie.

8. Procédé suivant la revendication 1, dans lequel la capacité identifiée est la capacité à exécuter une compensation de mouvement.

9. Procédé suivant la revendication 1, dans lequel :
- l'étape a comprend la détermination d'une largeur de bande disponible moyenne ou minimum d'une liaison par laquelle un des flux de données va être transmis;
- l'étape b comprend la sélection de l'intervalle parmi la pluralité d'intervalles qui a un débit le plus élevé parmi toute la pluralité d'intervalles que peut supporter un débit binaire de la liaison par laquelle les données vidéo vont être transmises, et
- l'étape c comprend le codage d'une pluralité de flux de données en utilisant une technique d'évolutivité à granularité fine, chacun de la pluralité de flux de données correspondant à un intervalle respectivement différent de débits auxquels les flux de données vont être transmis.

10. Système pour la transmission en multidiffusion de données vidéo, comprenant :
a) des moyens pour identifier pour chacun d'une pluralité de groupes de destinataires (240, 250, 260) un élément parmi l'ensemble composé de : une largeur de bande disponible moyenne ou minimum d'une liaison par laquelle un flux de données d'un segment vidéo donné doit être transmis au groupe, et une capacité d'un destinataire du groupe auquel le flux de données doit être transmis;
b) des moyens pour sélectionner pour chacun de la pluralité de groupes un élément correspondant parmi le jeu composé de : un intervalle parmi une pluralité d'intervalles prédéterminés de largeurs de bande, de sorte que l'intervalle sélectionné contienne la largeur de bande disponible moyenne ou minimum identifiée pour le groupe, et un type parmi une pluralité de types de flux de données différents (210, 220), dans lequel des couches (211, 213 à 215, 221, 223 à 225) de types de flux respectifs sont différentes les unes des autres, de sorte que la capacité identifiée du destinataire (240, 250, 260) dans le groupe soit utilisée pour traiter des données du type de flux de données sélectionné;
c) des moyens pour coder le flux de données de plusieurs manières en utilisant des types sélectionnés parmi la pluralité de types de flux de données différents (210, 220), dont chacun tire parti d'un intervalle respectif de largeurs de bande ou d'un type de flux de données qui a été ou va être sélectionné, et
d) des moyens pour transmettre simultanément des flux respectifs parmi les flux de données codés par les liaisons à chaque destinataire (240, 250, 260) dans un des groupes.

11. Support lisible par une machine contenant un code de programme informatique, dans lequel, lorsque le code de programme informatique est exécuté par un processeur, le processeur exécute un procédé de transmission de données vidéo, comprenant les étapes suivantes :
a) l'identification (306, 402) pour chacun d'une pluralité de groupes de destinataires (240, 250, 260) d'un élément parmi l'ensemble composé de : une largeur de bande disponible moyenne ou minimum d'une liaison par laquelle un flux de données d'un segment vidéo donné doit être transmis au groupe, et une capacité d'un destinataire du groupe auquel le flux de données doit être transmis;
b) la sélection (308, 404) pour chacun de la pluralité de groupes d'un élément correspondant parmi le jeu composé de : un intervalle parmi une pluralité d'intervalles prédéterminés de largeurs de bande, de sorte que l'intervalle sélectionné contienne la largeur de bande disponible moyenne ou minimum identifiée pour le groupe, et un type parmi une pluralité de types de flux de données différents (210, 220), dans lequel des couches (211, 213 à 215, 221, 223 à 225) de types de flux respectifs sont différentes les unes des autres, de sorte que la capacité identifiée du destinataire (240, 250, 260) dans le groupe soit utilisée pour traiter des données du type de flux de données sélectionné;
c) le codage (300, 406) du flux de données de plusieurs manières en utilisant des types sélectionnés parmi la pluralité de types de flux de données différents (210, 220), dont chacun tire parti d'un intervalle respectif de largeurs de bande ou d'un type de flux de données qui a été ou va être sélectionné, et
d) la transmission simultanée (310, 408) de flux respectifs parmi les flux de données codés par les liaisons à chaque destinataire (240, 250, 260) dans un des groupes.

12. Signal codé avec des données représentant un code de programme informatique, dans lequel, lorsque le code de programme informatique est exécuté par un processeur, le processeur exécute un procédé de transmission de données vidéo, comprenant les étapes suivantes :
a) l'identification (306, 402) pour chacun d'une pluralité de groupes de destinataires (240, 250, 260) d'un élément parmi l'ensemble composé de : une largeur de bande disponible moyenne ou minimum d'une liaison par laquelle un flux de données d'un segment vidéo donné doit être transmis au groupe, et une capacité d'un destinataire du groupe auquel le flux de données doit être transmis;
b) la sélection (308, 404) pour chacun de la pluralité de groupes d'un élément correspondant parmi le jeu composé de : un intervalle parmi une pluralité d'intervalles prédéterminés de largeurs de bande, de sorte que l'intervalle sélectionné contienne la largeur de bande disponible moyenne ou minimum identifiée pour le groupe, et un type parmi une pluralité de types de flux de données différents (210, 220), dans lequel des couches (211, 213 à 215, 221, 223 à 225) de types de flux respectifs sont différentes les unes des autres, de sorte que la capacité identifiée du destinataire (240, 250, 260) dans le groupe soit utilisée pour traiter des données du type de flux de données sélectionné;
c) le codage (300, 406) du flux de données de plusieurs manières en utilisant des types sélectionnés parmi la pluralité de types de flux de données différents (210, 220), dont chacun tire parti d'un intervalle respectif de largeurs de bande ou d'un type de flux de données qui a été ou va être sélectionné, et
d) la transmission simultanée (310, 408) de flux respectifs parmi les flux de données codés par les liaisons à chaque destinataire (240, 250, 260) dans un des groupes.
